# EUROPÄISCHE PATENTSCHRIFT

(11) **EP 0 391 115 B1**
(45) Veröffentlichungstag und Bekanntmachung des Hinweises auf die Patenterteilung: **09.06.1993**
(21) Anmeldenummer: 90105067.4
(22) Anmeldetag: 17.03.1990
(51) Int. Cl.: B25H 1/04, B25H 1/10

(54) **Arbeitstisch**
Work-table
Etabli

(30) Priorität: 04.04.1989 DE 3910826
(43) Veröffentlichungstag der Anmeldung: 10.10.1990
(73) Patentinhaber: wolfcraft GmbH, D-56745 Weibern (DE)
(72) Erfinder: Wolff, Robert, D-5446 Engeln (DE)
(74) Vertreter: Peerbooms, Rudolf, Dipl.-Phys.

(56) Entgegenhaltungen:
- EP-A- 0 068 258
- EP-A- 0 098 101
- AU-B- 532 153
- CH-A- 659 615
- DE-C- 136 893
- DE-C- 3 619 947
- FR-A- 2 092 962
- GB-A- 2 025 831
- US-A- 4 483 573

## Beschreibung

Die Erfindung betrifft einen als Werkbank und zugleich als Kreissägetisch ausgerüsteten Arbeitstisch, dessen Tischfläche in eine Werkbankplatte und eine Kreissäge-Aufspannplatte unterteilt ist, wobei die Aufspannplatte relativ zur Werkbankplatte verschwenkbar ist.

Ein derartiger kombinierter Arbeitstisch ist durch die DE-A-28 19 033 bekannt. Der bekannte Arbeitstisch ist als ein an einer Wand stationär zu verankerndes Möbelstück ausgebildet, dessen Oberseite eine Werkbankplatte bildet, unterhalb der über Parallelogrammlenker eine eine Arbeitsmaschine tragende Ausschwenkplatte am Möbelstück angelenkt ist, welche aus dieser versenkten Stellung bis in eine in Höhe der Werkbank liegende Arbeitsstellung nach vorne hin translatorisch hochschwenkbar ist. Heimwerkern steht aber vielfach kein Aufstellplatz für ein solches stationäres Möbelstück zur Verfügung. Heimwerker wünschen im allgemeinen einen bei Nichtgebrauch raumsparend zusammenklappbaren Arbeitstisch, den sie beispielsweise in einer Garage benutzen und bei Nichtgebrauch als flaches Paket an einer Garagenwand abstellen oder aufhängen können. Bei dem bekannten Arbeitstisch neigt zudem die Ausschwenkplatte in ihrer hochgeschwenkten Arbeitsstellung zu Schwingungen, was höchstens durch aufwendige Verriegelungs- und Verspannungseinrichtungen beseitigt werden kann.

Es sind ferner eine Vielzahl von zusammenklappbaren Heimwerkertischen bekannt, die jedoch eine verhältnismäßig kleine Tischfläche aufweisen, die entweder nur als Geräteaufspannplatte (DE-A-26 17 800) oder nur als Werkbankplatte (FR-A-23 50 179, GB-A-20 25 831, DE-U-84 23 345) ausgebildet sind. Diese bekannten Arbeitstische sind infolgedessen nur begrenzt einsetzbar. Von Heimwerkern werden dagegen möglichst universell einsetzbare Arbeitstische verlangt.

Der Erfindung liegt die Aufgabe zugrunde, einen gattungsgemäß kombinierten Arbeitstisch dahingehend weiterzubilden, daß er trotz seiner großen Gesamttischfläche einerseits als flaches, wegräumbares Paket zusammenklappbar und andererseits in aufgeklappter Stellung für sich standfest ist und eine hohe, nicht schwingende Eigenstabilität seiner geteilten Gesamttischfläche aufweist, wobei die Kreissäge oder dgl. zudem bequem montierbar und demontierbar sein soll.

Die Lösung dieser Aufgabe ist erfindungsgemäß dadurch erreicht,
a) daß der Arbeitstisch einen die Werkbankplatte und die Aufspannplatte tragenden gemeinsamen Oberrahmen aufweist,
b) daß die Beine nur im Bereich der Werkbankplatte am Oberrahmen angelenkt, paarweise durch die Koppelstange verbunden und zur selben Seite hin klappbar sind,
c) daß die Beine zusammen mit ihren Querverstrebungen, ohne den Aufspannraum der Kreissäge oder dgl. zu tangieren, unter die Aufspannplatte klappbar sind,
d) daß die Aufspannplatte zum Aufspannen der Kreissäge oder dgl. bis in eine schräge Stellung über die Werkbankplatte zurückklappbar ist und
e) daß die Werkbank an ihrer der Aufspannplatte abgewandten Seite eine Spannvorrichtung zum Einspannen von Werkzeugen aufweist.

Durch die Erfindung werden eine Reihe von Vorteilen erreicht. Durch den durchgehenden Oberrahmen wird eine stabile, nicht schwingende Abstützung von Werkbankplatte und Aufspannplatte gewährleistet, so daß die gesamte, von Werkbankplatte und Aufspannplatte gebildete Tischfläche als hochbelastbare Arbeitsfläche genutzt werden kann. Bei dem Arbeitstisch nach der Erfindung behindern die zum Sägebereich gehörenden Aufbauten nicht ein Arbeiten an der Werkbank, und umgekehrt stören die Werkbankaufbauten, speziell ihre Spannvorrichtung, nicht das Arbeiten an der Kreissäge, bzw. sonstiger an dieser Aufspannplatte befestigter Maschinen wie Stichsäge, Fräsmaschinen und dgl. Andererseits ist ein Auswechseln oder ein Ausbauen der Kreissäge, Stichsäge oder dgl. bequem durchführbar, da nunmehr die Aufspannplatte in eine schräg aufwärts über die Werkbankplatte gerichtete Stellung geschwenkt werden kann, in der ihre Unterseite für eine Montage oder Demontage der Säge zugänglich ist, während zugleich die Oberseite der Aufspannplatte soweit Abstand von der Werkbankplatte einhält, daß das Kreissägeblatt, die Stichsäge oder das jeweilige Werkzeug nicht auf die Werkbank aufstoßen.

Nach dem Zurückklappen liegt die Aufspannplatte wieder auf dem Oberrahmen auf, so daß sie eine quasi starre Verlängerung der Werkbankplatte darstellt. Durch die Anlenkung der Beine nur im Bereich der Werkbankplatte und durch ihre Einklappbarkeit unter die Aufspann platte ergibt sich der weitere Vorteil, daß der Arbeitstisch nicht nur zu einem flachen Paket zusammenklappbar ist, sondern daß die Längsabmessung des zusammengeklappten Paketes nur wenig größer als die Längsabmessung der Gesamttischfläche ist. In aufgeklappter Stellung ragt die Aufspannplatte zwar ein Stück weit über die von den vier Beinen definierte Standfläche hinaus. Durch die Anordnung der relativ schweren Werkbankplatte oberhalb dieser Standfläche und durch die Anordnung einer Werkzeug-Einspannvorrichtung an der der Aufspannplatte abgewandten Seite der Werkbank ist bei dem Arbeitstisch nach der Erfindung der Schwerpunkt so weit nach hinten über die Standfläche verlagert, daß der Arbeitstisch sich durch eine hohe Standfestigkeit auszeichnet.

Gemäß einer bevorzugten Ausführungsform der Erfindung können die beiden Tischbein-Koppelstangen ein Werkzeugtablett tragen, auf dem die Werkzeuge zugriffsbereit abgelegt werden können. Darüber hinaus erbringt dieses Werkzeugtablett eine zusätzliche Aussteifung des Tischuntergestelles und eine weitere Verlagerung des Tischschwerpunktes zur Werkbankplatte hin, wodurch die Standfestigkeit des Arbeitstisches weiter erhöht wird.

Weitere Merkmale der Erfindung, durch den die Einsatzmöglichkeiten des Arbeitstisch erhöht und das Zusammenklappen bzw. wieder Aufstellen des Arbeitstisches vereinfacht werden, sind in den Unteransprüchen angegeben.

Die Erfindung wird im folgenden anhand in der Zeichnung dargestellter Ausführungsbeispiele näher beschrieben. In der Zeichnung zeigen:

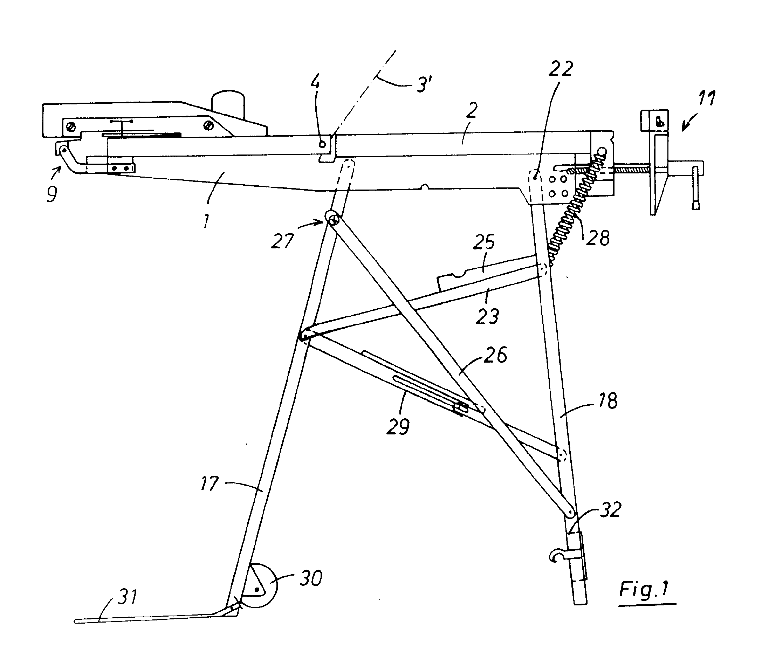

- Fig. 1: den Arbeitstisch nach der Erfindung, in Seitenansicht,

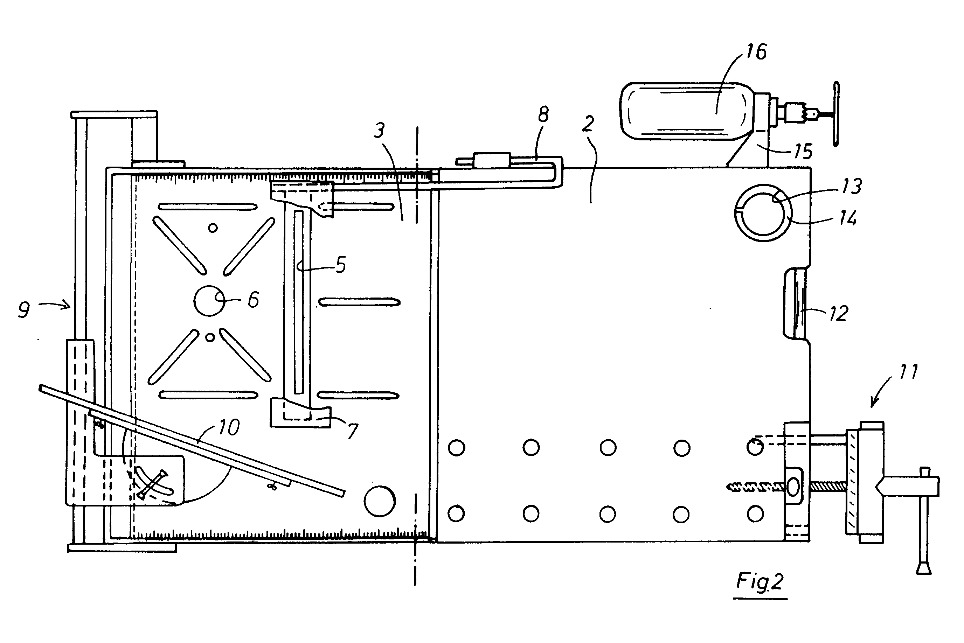

- Fig. 2: eine Draufsicht auf den Arbeitstisch,

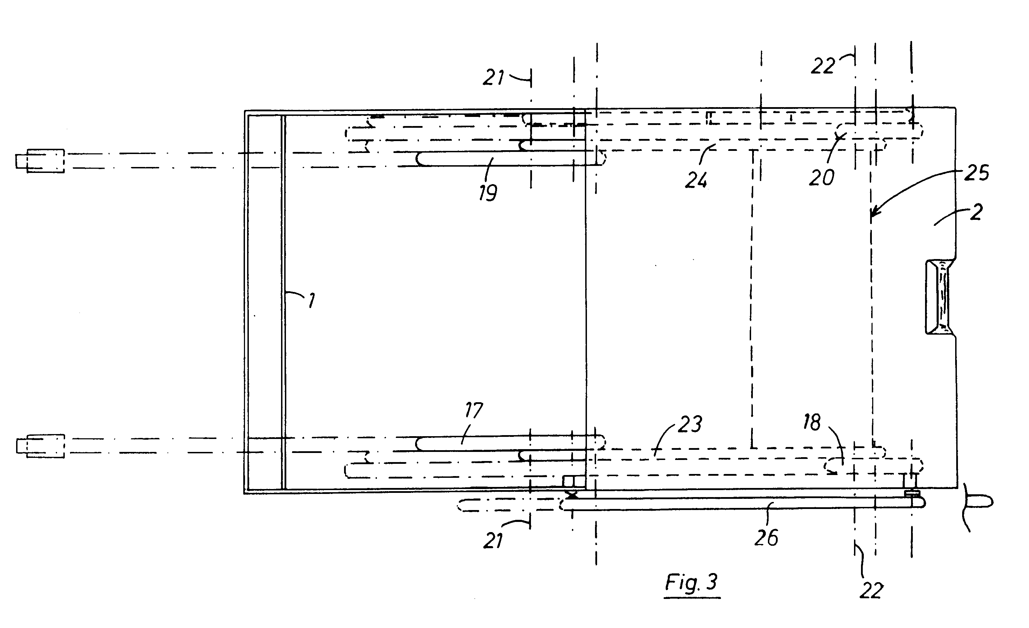

- Fig. 3: eine Draufsicht-Skizze zur Erläuterung des zusammenklappbaren Tischuntergestelles,
- Fig. 4 bis 9: jeweils in einer vereinfachten schematischen Darstellung sechs aufeinanderfolgende Stellungen beim Zusammenklappen und Wiederaufklappen des Arbeitstisches, und
- Fig.10: eine zweite Ausführungsform des Arbeitstisches nach der Erfindung.

Der Arbeitstisch besitzt einen rechteckigen Oberrahmen 1, der an einer Seite eine etwa rechteckige Werkbankplatte 2 und an der anderen Längsseite eine Aufspannplatte 3 trägt, welche um eine Achse 4 schwenkbar im Oberrahmen 1 gelagert ist und in eine schräg nach oben gerichtete Stellung 3′ über die Werkbankplatte 2 geschwenkt werden kann. Die Aufspannplatte 3 ist mit einem Schlitz 5 für ein Kreissägeblatt und mit einem Loch 6 für eine Fräsmaschine oder ein Stichsägeblatt in üblicher Weise ausgerüstet. Das Kreissägeblatt ist durch eine Haube 7 abdeckbar, die über einen U-förmig abgekröpften Hebel 8 an einer Seite der Werkbankplatte 2 schwenkbar gelagert ist. Am vorderen Ende ist am Oberrahmen 1 eine Halterung und Führung 9 für einen schwenkbaren Führungsanschlag 10 vorgesehen.

An der der Aufspannplatte 3 gegenüberliegenden Randseite der Werkbank 2 ist eine Spannvorrichtung 11 an der Werkbank angeordnet, und an der gleichen Seite liegt in einer Ausnehmung der Werkbank ein Handgriff 12. Unter einem Durchbruch 13 der Platte 2 ist ein Normeinspannring 14 für Normeinspannschäfte von 43 mm ⌀ angeordnet, der eine Aufspannung einer mit einem entsprechenden Adapter-Normzapfen versehenen Handbohrmaschine oberhalb der Werkbank 2 erlaubt. An einer Längsseite ist ferner an die Werkbankplatte bzw. deren Oberrahmen 1 ein Einspannring 15 seitlich angeschraubt, der die Aufspannung einer Handbohrmaschine 16 seitlich neben der Platte 2 erlaubt.

Der für Werkbankplatte 2 und Aufspannplatte 3 gemeinsame Oberrahmen 1 ist nur im Bereich der Werkbankplatte 2 von vier Beinen 17, 18, 19, 20 getragen, die um die Anlenkachsen 21, 22 klappbar sind. An jeder Längsseite des Tisches sind die Beine 17, 18 bzw. 19, 20 jeweils durch eine Koppelstange 23, 24 verbunden, die angrenzend an die hinteren Beine 18, 20 ein Werkzeugtablett 25 tragen. Die beiden an einer Tischlängsseite angeordneten Beine 17, 18 sind ferner durch eine Verriegelungsstange 26 miteinander verbunden, welche an das untere Ende des hinteren Beines 18 angelenkt ist und welche am Bein 17 im oberen Bereich bei Position 27 ver- und entriegelbar ist. Die Beine sind durch an den hinteren Beinen 18, 20 und am hinteren Rand der Werkbank eingespannte Zugfedern 28 belastet, durch die die aufgeklappte Stellung des Tisches gesichert ist. An der der Verriegelungsstange 26 gegenüberliegenden Längsseite sind die beiden Beine 19, 20 durch eine zweigeteilte, nach oben hin ausknickbare Verriegelungseinrichtung 29 ausgesteift. Ferner sind die vorderen Beine 17, 19 an ihrer den hinteren Beinen 18, 20 zugewandten Seite jeweils mit einer Laufrolle 30 versehen, die bei aufgeklapptem Arbeitstisch etwas oberhalb des Aufstellungsbodens liegen. Schließlich ist an den beiden vorderen Beinen 17, 19 noch eine Trittplatte 31 schwenkbar gelagert, auf die sich der Benutzer beim Ausführen von Sägearbeiten stellen kann, um so die Standfestigkeit des Tisches zu erhöhen. Die beiden Hinterbeine 18, 20 sind unten durch eine Fußtrittstange 32 miteinander verbunden.

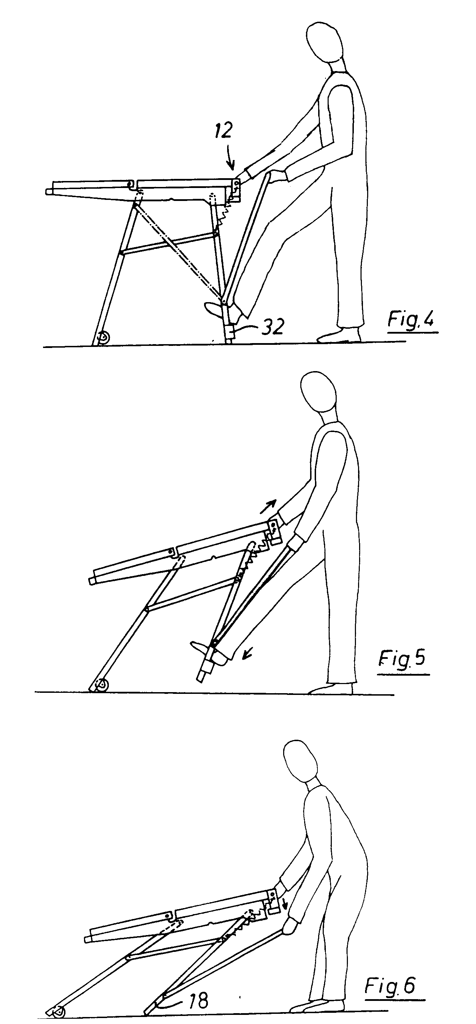

Die Fig. 4 bis 9 veranschaulichen schematisch das Zusammenklappen und Wiederaufklappen des Arbeitstisches, wobei zur Vereinfachung der Darstellung keine aufgespannten Maschinen gezeigt sind, die aber ein Zusammenklappen des Tisches nicht behindern würden.

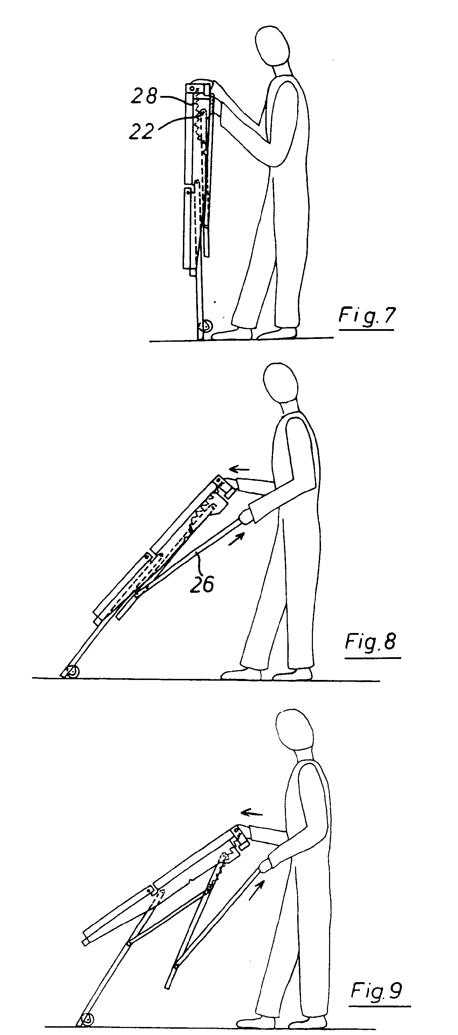

Beim Zusammenklappen wird zunächst die Verriegelungseinrichtung 29 für ein Einknicken nach oben entriegelt, und danach wird die Verriegelungsstange 26 vom vorderen Bein 17 gelöst und nach hinten als zweite Handhabe geschwenkt. Mit der anderen Hand greift die Bedienungsperson den am hinteren Rand des Tisches vorgesehenen Handgriff 12, an dem gezogen wird, während mit einem Fuß ein Gegendruck auf die Trittstange 32 ausgeübt wird. Nach Durchlaufen der bereits teilweise zusammengeklappten Stellung nach Fig. 5 wird der Tisch mit seinen hinteren Beinen 18, 20 wieder auf den Boden aufgesetzt, wonach das Gewicht des Tisches, insbesondere bei eingespannter Sägemaschine schon ausreicht, den Tisch unter Überwindung der Rückstellkraft der Federn 28 vollständig zusammenzuklappen, wobei allerdings die Zugfeder 28 - bezogen auf die oberen Anlenkpunkte 22 der hinteren Beine 18, 20 - in eine Übertotpunktlage geführt sind, in der sie die zusammengeklappte Stellung des Tisches sichern, vgl. Fig. 7. Der Tisch kann im zusammengeklappten Zustand auf Laufrollen 30 wie eine Schubkarre verfahren werden oder auch hochkant stehend raumsparend weggeräumt werden. Die Griffstange 26 wird dabei am Tisch befestigt.

Zum Wiederaufklappen des Tisches wird die Verriegelungsstange 26 wieder als Handgriff benutzt, und die Beine werden mittels dieser Stange 26 vom Oberrahmen weggezogen, wobei wiederum die Federn 28 über den Totpunkt geführt werden und danach das weitere Aufklappen des Tisches im wesentlichen übernehmen. Trotz des - insbesondere bei aufgespannten Maschinengroßen Gewichtes des Tisches und trotz der über den Totpunkt zu führenden Zugfedern 28 kann das Zusammenklappen und Wiederaufklappen des Arbeitstisches rasch und ohne die Gefahr eines Einklemmens von Fingern oder eines Armes durchgeführt werden.

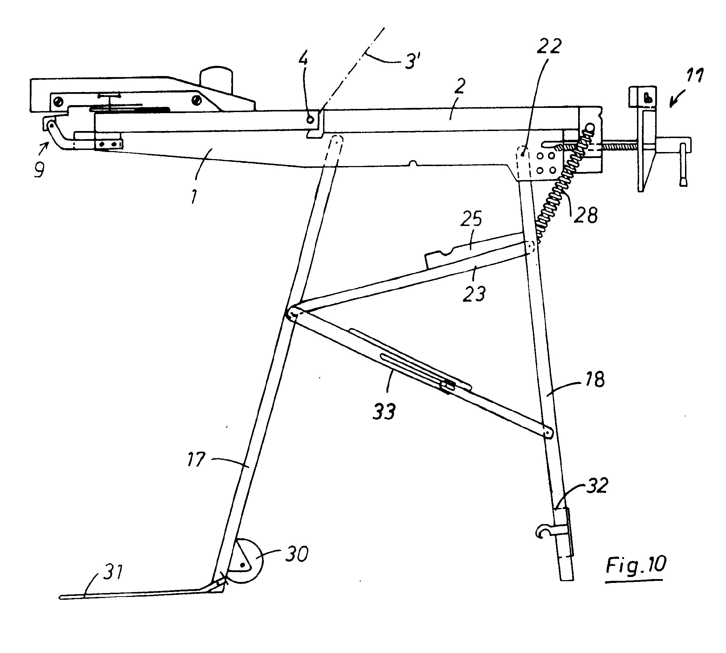

Beim Ausführungsbeispiel nach Fig. 10 ist anstelle der Griffstange 26 auch an den Beinen 17, 18 eine zweiteilige, einknickbare Verriegelungseinrichtung 33 vorgesehen, die parallel zur Verriegelungseinrichtung 29 verläuft. Im übrigen ist der gleiche Aufbau vorgesehen. Hier steht die Bedienungsperson beim Zusammenklappen vor den Beinen 17, 18, und der Tisch wird hier einmal am Griff 12 und zum anderen beispielsweise am gegenüberliegenden Rand der Tischplatte gefaßt.

## Patentansprüche

1. Als Werkbank und zugleich als Kreissägetisch ausgerüsteter Arbeitstisch, dessen Tischfläche in eine Werkbankplatte und eine Kreissäge-Aufspannplatte unterteilt ist, wobei die Aufspannplatte relativ zur Werkbankplatte verschwenkbar ist, dadurch gekennzeichnet,
a) daß der Arbeitstisch einen die Werkbankplatte (2) und die Aufspannplatte (3) tragenden gemeinsamen Oberrahmen (1) aufweist,
b) daß die Beine (17, 18, 19, 20) nur im Bereich der Werkbankplatte (2) am Oberrahmen (1) angelenkt, paarweise durch eine Koppelstange (23, 24) verbunden und zur selben Seite hin klappbar sind,
c) daß die Beine (17, 18, 19, 20) zusammen mit ihren Querverstrebungen, ohne den Aufspannraum der Kreissäge oder dgl. zu tangieren, unter die Aufspannplatte (3) klappbar sind,
d) daß die Aufspannplatte (3) zum Aufspannen der Kreissäge oder dgl. bis in eine schräge Stellung über die Werkbankplatte (2) zurückklappbar ist und
e) daß die Werkbank an ihrer der Aufspannplatte (3) abgewandten Seite eine Spannvorrichtung (11) zum Einspannen von Werkzeugen aufweist.

2. Arbeitstisch nach Anspruch 1, dadurch gekennzeichnet, daß die beiden Koppelstangen (23, 24) ein Werkzeugtablett (25) tragen.

3. Arbeitstisch nach den Ansprüchen 1 und 2, dadurch gekennzeichnet, daß im Bereich der Werkbank (2) Befestigungseinrichtungen (14, 15) zum Aufspannen einer Handbohrmaschine (16) vorgesehen sind.

4. Arbeitstisch nach Anspruch 1, gekennzeichnet durch die Beine (17 bis 20) in aufgeklappter Stellung haltende, an der Werkbank (2) angeschlossene Zugfedern (28), welche beim Einklappen der Beine in eine Übertotpunktlage zur Sicherung der zusammengeklappten Stellung gelangen.

5. Arbeitstisch nach Anspruch 1, dadurch gekennzeichnet, daß die der Aufspannplatte (3) benachbarten Beine (17, 19) an ihrer den anderen Beinen (18, 20) zugewandten Seite mit Laufrollen (30) versehen sind, die bei aufgeklapptem Arbeitstisch vom Boden abgehoben sind.

6. Arbeitstisch nach Anspruch 1, dadurch gekennzeichnet, daß an der Werkbank (2) an der Seite der Spannvorrichtung (11) ein Handgriff (12) zum Greifen des Tisches beim Zusammenklappen vorgesehen ist und daß die beiden an der Seite der Spannvorrichtung angeordneten Beine (18, 20) durch eine untere Fußtrittstange (32) verbunden sind.

7. Arbeitstisch nach Anspruch 6, dadurch gekennzeichnet, daß zumindest die beiden an einer Tischlängsseite angeordneten Beine (17, 18) durch eine Verriegelungsstange (26) verbunden sind, welche von dem vorderen Bein (17) lösbar und als Griffstange beim Zusammenklappen bzw. Aufklappen des Arbeitstisches handhabbar ist.

8. Arbeitstisch nach Anspruch 1, dadurch gekennzeichnet, daß an den vorderen Beinen (17, 19) eine auf den Boden schwenkbare Trittplatte (31) zur Vergrößerung der Standfläche vorgesehen ist.

9. Arbeitstisch nach einem der Ansprüche 1 bis 8, dadurch gekennzeichnet, daß die Aufspannplatte (3) zugleich zur Aufspannung von Stichsägen oder Fräsmaschinen geeignet ist.

## Claims

1. Work-table, equipped for use as a workbench and also as a circular-saw bench, whose table surface is divided into a workbench-board and a clamping-board for a circular saw, the clamping board being rotatable relative to the workbench board, characterized in that
a) the work-table has a common upper frame (1) carrying both the workbench board (2) and the clamping-board (3),
b) the legs (17,18,19,20) are connected to the upper frame (1) only in the area of the workbench board (2), are connected in pairs by a connecting bar (23,24), and may be folded away to the same side,
c) the legs (17,18,19,20) together with their cross-struts may be folded under the clamping-board (3) without infringing upon the clamping area of the circular-saw etc.,
d) the clamping-board (3) may be folded back, for the purpose of clamping the circular saw etc., into an angled setting above the workbench board (2) and
e) the workbench has on its side facing away from the clamping board (3) a clamping device (11) for the clamping in of tools.

2. Work-table according to Claim 1, characterized in that the two connecting bars (23,24) carry a tool tray (25).

3. Work-table according to Claims 1 and 2, characterized in that fastening devices (14,15) are provided in the area of the workbench (2) for clamping on a manual drill (16).

4. Work-table according to Claim 1, characterised by tension springs (28), connected to the workbench (2) and holding the legs (17 to 20) in the unfolded position, which, when the legs are folded away, arrive in an upper dead centre position to secure the folded away position.

5. Work-table according to Claim 1, characterized in that the legs (17,19) adjacent to the clamping board (3) are equipped with rollers (30), on their side facing the other legs (18,20), which when the worktable is folded away are lifted from the floor.

6. Work-table according to Claim 1, characterized in that a handle (12) is provided on the workbench (2), at the side of the clamping device (11), for the purpose of holding the table as it is folded away, and in that the two legs (18,20) located at the side of the clamping device are connected by a lower foot-rod (32).

7. Work-table according to Claim 6, characterized in that at least the two legs (17,18) located on one longitudinal side of the table are connected by a bolt-closure rod (26) which may be detached from the front leg (17) and used as a gripping rod during folding away or unfolding of the worktable.

8. Work-table according to Claim 1, characterized in that on the front legs (17,19) a foot-board (31), rotatable on to the floor, is provided for the enlargement of the standing surface.

9. Work-table according to one of Claims 1 to 8, characterized in that the clamping board (3) is suitable for clamping of piercing saws or milling machines.

## Revendications

1. Table de travail, équipée en établi et, simultanément, en table à scie circulaire, dont la surface de table est subdivisée en une plaque d'établi et une plaque de montage par serrage pour scie circulaire, la plaque de serrage étant pivotante par rapport à la plaque d'établi, caractérisée en ce que
a) la table de travail présente un cadre supérieur (1) portant en commun la plaque d'établi (2) et la plaque de serrage (3),
b) les pieds (17,18,19,20) ne sont articulés sur le cadre supérieur (1) que dans la zone de la plaque d'établi (2), reliés au moyen d'une bielle de couplage (23,24) et susceptibles d'être rabattus du même côté, par couples,
c) les pieds (17,18,19,20) conjointement avec leurs entretoises transversales, sont rabattables sous la plaque de serrage (3), sans venir tangenter l'espace de serrage de la scie circulaire ou analogue,
d) la plaque de serrage (3) est rabattable, lors du serrage de la scie circulaire ou analogue, jusqu'à une position inclinée, au-dessus de la plaque d'établi (2),
e) l'établi présente, sur son côté opposé à la plaque de serrage (3), un dispositif de serrage (11) destiné à enserrer des outils.

2. Table de travail selon la revendication 1, caractérisée en ce que les deux bielles de couplage (23,24) portent une tablette à outils (25).

3. Table de travail selon les revendications 1 et 2, caractérisée en ce que, dans la zone de l'établi (2), des dispositifs de fixation (14,15) sont prévus pour enserrer une perceuse portative (16).

4. Table de travail selon la revendication 1, caractérisée par des ressorts de traction (28), maintenant les pieds (17 à 20) en position déployée par rabattement, raccordés à l'établi (2) et arrivant, lors du repli des pieds, en une position de dépassement de point mort, en vue d'assurer la sécurité de la position repliée.

5. Table de travail selon la revendication 1, caractérisée en ce que les pieds (17,19) voisins de la plaque de serrage (3) sont pourvus, de leur côté tourné vers les autres pieds (18,20), de galets (30) qui sont soulevés du sol lorsque la table de travail est déployée par rabattement.

6. Table de travail selon la revendication 1, caractérisée en ce que sur l'établi (2), du côté du dispositif de serrage (11), est prévue une poignée (12) destinée à saisir la table lors de la fermeture par rabattement et en ce que les deux pieds (18,20), disposés du côté du dispositif de serrage, sont reliés au moyen de la tige repose-pied (32) inférieure.

7. Table de travail selon la revendication 6, caractérisée en ce qu'au moins les deux pieds (17,18) disposés sur un côté long de la table sont reliés au moyen d'une tige de verrouillage (26), susceptible d'être démontée du pied avant (17) et manipulable à titre de tige de prise lors de la fermeture par rabattement, respectivement du déploiement par rabattement, de la table de travail.

8. Table de travail selon la revendication 1, caractérisée en ce que,sur les pieds avant (17,19),est prévue une plaque repose-pied (31), pivotante au sol, pour augmenter la surface de pose.

9. Table de travail selon l'une des revendications 1 à 8, caractérisée en ce que la plaque de serrage (3) convient en même temps pour assurer le serrage de scies sauteuses ou de fraiseuses.
